# EUROPEAN PATENT APPLICATION

(11) **EP 0 877 285 A2**
(43) Date of publication of application: **11.11.1998**
(21) Application number: 98108364.5
(22) Date of filing: 07.05.1998
(51) Int. Cl.: G03B 1/10, G03B 17/42, G03B 19/04, G03B 17/30

(54) **Camera having a single knob for manually winding and rewinding the film**

(30) Priority: 08.05.1997 JP 117346/97; 13.05.1997 JP 121828/97
(71) Applicant: SEIKO PRECISION INC., Tokyo (JP)
(72) Inventor: Sakurai, Motoharu, c/o Seiko Precision Inc., Narashino-shi, Chiba-ken (JP)
(74) Representative: Grünecker, Kinkeldey, Stockmair & Schwanhäusser Anwaltssozietät

(57) **Abstract**

There is provided a low price camera having a simple structure in which a winding operation and a rewinding operation can be performed by one knob and an APS film capable of displaying a film used state is used. When a reverse rotation preventing lever 4 is disposed at a first position, a reverse rotation preventing pawl 4a is meshed with a winding knob 2 so as to make it possible to rotate only counterclockwise, thereby rotating a winding shaft 3 interlocking therewith so as to wind a film. At a second position in which a rewinding button 5 is pushed so as to become an operating state and the reverse rotation preventing lever 4 is swung, the reverse rotation preventing pawl 4a is meshed with the winding knob 2 so as to make it possible to rotate only clockwise, thereby interrupting an interlock with the winding shaft 3 and rewinding the film by a rotation of the winding knob 2. In order to return the rewinding button 5 to a non-operating state, an operating lever 11 is swung, thereby releasing an engagement between an engaging portion 12a provided on a shaft of the operating lever and an elastically engaging arm 5d. Further, a transmitting wheel train interlocking with a swing motion of the operating lever for locking a cover is provided, a clutch lever is frictionally connected in this wheel train, a clutch is let in when taking out a film cartridge and so a drive gear and a rotating gear are rotated together, and the clutch is disengaged when inserting the film cartridge and so only the drive gear is rotated.

## Description

### Technical Field of the Invention

The present invention relates to a low price camera, and more particularly to a camera in which a film is manually wound and rewound and a used state of the film is displayed in a film cartridge, i.e. an advanced photo system (hereafter, referred to as APS) film is used.

### Prior Art

Hitherto, there has been a low price camera, i.e. a camera which is referred to as a so-called film with a lens, as a camera in which a film is manually wound without automatically winding a film by using a motor and in which an equipment such as an automatic focusing system is not provided. This camera is a throwaway or disposal type and is adapted so as to rewind a previously wound film one frame by one frame by means of a rewinding knob in order to make a mechanism simple. Further, in the case of a manual camera in which a film can be replaced, a winding knob and a rewinding knob have been independently provided. And, in a camera in which the APS film can be used and replaced, operations such a winding and rewinding of the film and a display switching of a used state of the film in a cartridge have been performed by a motor by means of using a battery.

### Problems to be Solved by the Invention

In the camera in which the film is wound and rewound by a motor, since it is not necessary to provide the winding knob and the rewinding knob on an outer frame of the camera, an external appearance is neat. Further, in the so-called film with a lens, since it is not necessary to replace the film, it suffices if only the rewinding knob is provided. However, in the camera in which the film can be replaced and operations such a winding of the film are manually performed, the winding knob and the rewinding knob have been independently provided, so that the external appearance has not been neat correspondingly. Further, in the conventional film with a lens, although the structure is simple, parts for photographing such as a lens are naturally used, but the parts are discarded even if they can be still used because they are throwaway parts, so that a wasteful consumption has been promoted. Further, also in the camera in which the APS film is used, since it is throwaway, it has not been necessary to switch a used state of the film. In the camera in which the APS film can be replaced, since operations such as a winding and rewinding of the film and a display switching of a used state of the film in a cartridge are performed by a motor, electric parts are required, so that there has been a limit in reducing a cost.

### Means for Solving the Problems

In order to provide a camera which is inexpensive in the same degree as the film with a lens and in which a used state of an APS film can be switched and which has a neat external appearance, in a camera of the present invention one knob is used for winding and rewinding by a rotating direction regulating member. A structure of the camera is adapted such that after the rewinding is made an operating state, an exposure of a film can not be performed unless that operating state is released through parts used when taking out the film cartridge. Further, the structure is adapted such that when a locking operation of a cover after charging a film and a lock releasing operation of a cover when taking out a film are manually performed, a display of a used state of the film in the film cartridge is switched interlocking with these operations.

### Mode for Carrying Out the Invention

The invention provides a camera in which a film cartridge having a used state mark for a film housed therein is used and the camera manually windable and rewindable the film having a winding knob for a film, a winding shaft for a film, a rotating direction regulating member and a regulating member drive portion for driving the rotating direction regulating member. Further, when the rotating direction regulating member is disposed at a first position, the winding knob is made possible to be rotated only in one direction and the winding shaft is rotated interlocking with a rotation of the winding knob, thereby winding the film. Still further, when the rotating direction regulating member is disposed at a second position by the regulating member drive portion, the winding knob is made possible to be rotated only in a reverse direction and an interlock with the winding shaft is interrupted, so that a rewinding of the film is performed by the rotation of the winding knob in the reverse direction.

Further, the camera mentioned above is provided with an operating lever for locking a cover of a film cartridge housing portion. And, a mechanism for maintaining an operating state of the regulating member drive portion is provided between the regulating member drive portion and the operating lever, and in order to make the regulating member drive portion a non-operating state, the mechanism for maintaining an operating state of the regulating member drive portion is released by swinging the operating lever.

Still further, the camera mentioned above comprises a rotating gear for rotating a film shaft in the film cartridge, a drive gear for opening and closing a shading cover in the film cartridge and an operating lever for locking a cover of a film cartridge housing portion of the camera. And, in a transmitting wheel train for transmitting a swinging motion of the operating lever to the rotating gear and the drive gear, a clutch mechanism is provided in a wheel train extending from the operating lever to the rotating gear. Further, when taking out the film cartridge, the clutch mechanism is let in by a swinging motion of the operating lever in one direction, thereby rotating the rotating gear so as to display a predetermined used state by a used state mark for a film and rotating the drive gear so as to close the shading cover. Still further, when inserting the film cartridge, the clutch mechanism is disengaged by a swinging motion of the operating lever in a reverse direction, thereby making the rotating gear non-rotatable and rotating the drive gear in a reverse direction so as to open the shading cover.

### Embodiment

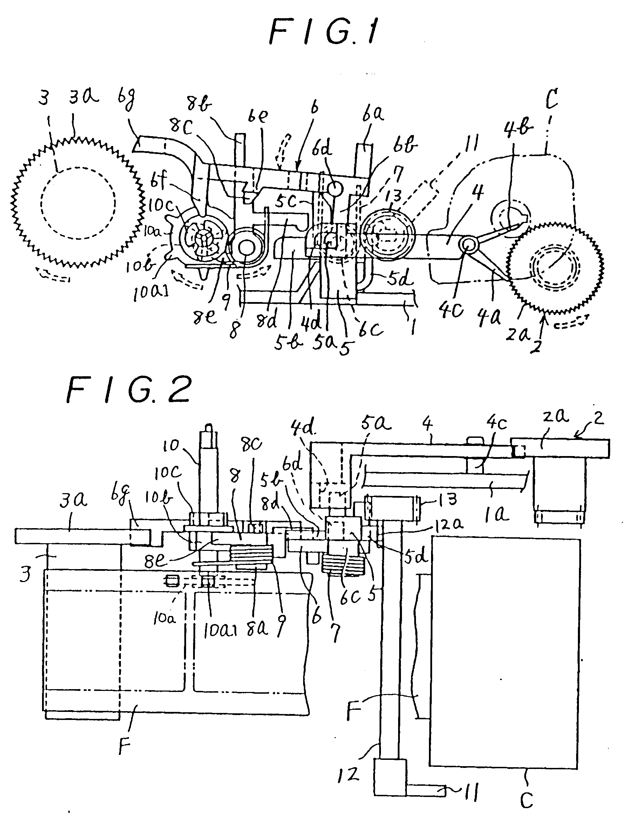

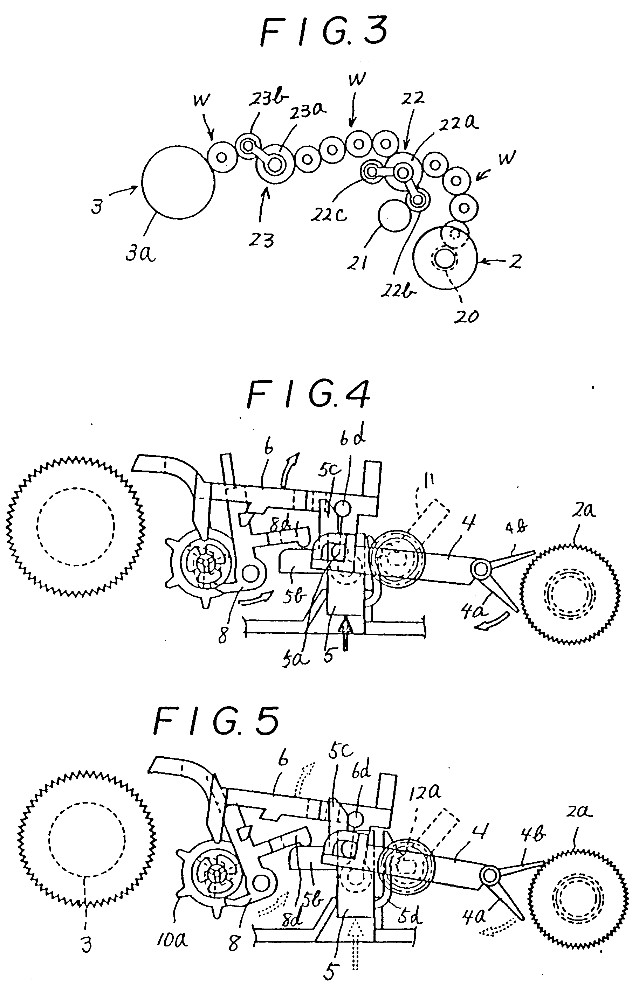

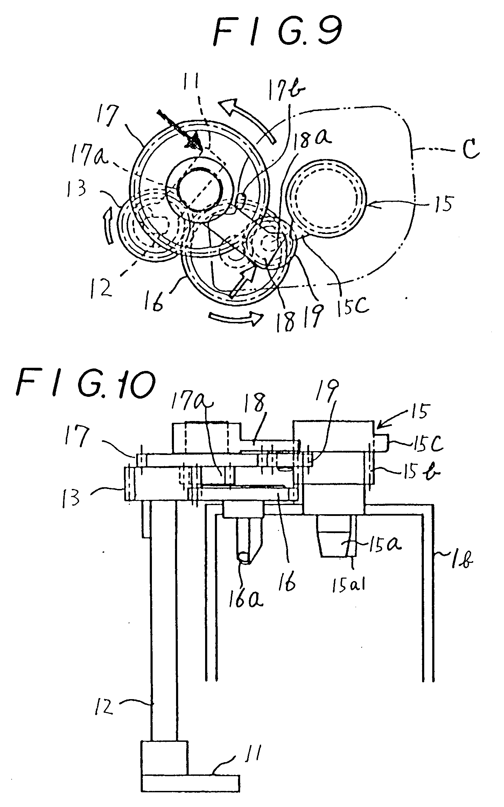

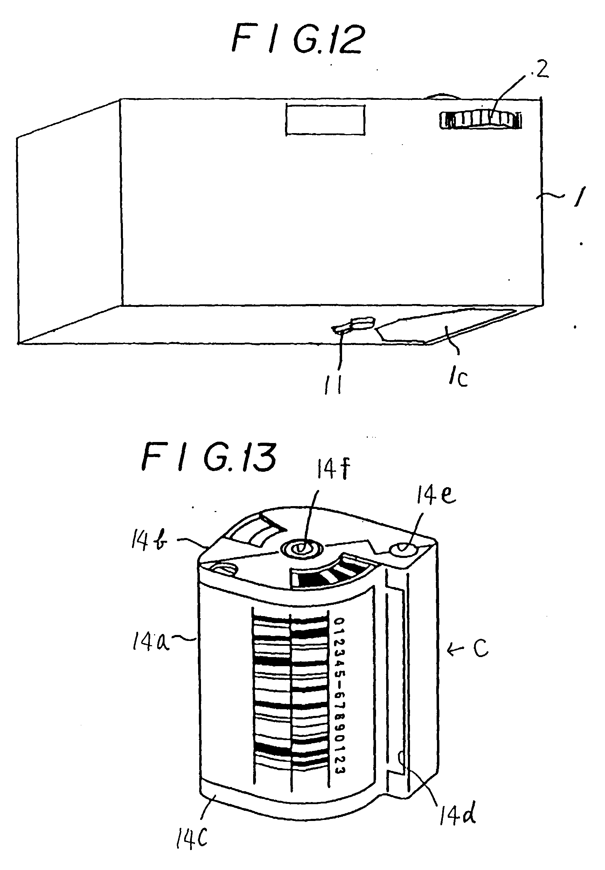

In explaining an embodiment with reference to the drawings, as shown in Figs. 1 and 2, the following mechanisms are supported by a middle plate 1a of a camera case 1. A film cartridge C is inserted into a film cartridge housing portion 1b (refer to Fig. 10) disposed within the case 1 by opening a cover 1c (refer to Fig. 12) disposed provided in a bottom of the case 1. A film F is drawn from a slit 14d (refer to Fig. 13) formed on a side surface of the film cartridge C, and a photographing is performed one frame by one frame. A winding knob 2 is rotatably disposed at a right position in Fig. 1, and a tooth portion 2a on an outer periphery of the winding knob 2 slightly projects from an upper portion of a back surface in the case 1, so that a user can operate it. A winding shaft 3 is disposed at a left position in Fig. 1, and a rotation of the winding knob 2 is transmitted to the winding shaft 3 through a transmitting wheel train W in Fig. 3 described later. A gear 3a is provided in an upper end portion of the winding shaft 3.

One of a pair of reverse rotation preventing pawls 4a and 4b extending to one end portion of a reverse rotation preventing lever 4, which is a rotating direction regulating member, engages with the tooth portion 2a of the winding knob. The reverse rotation preventing lever 4 is swingably supported by a pin 4c provided on the middle plate 1a perpendicularly thereto, and a connecting groove portion 4d is provided at the other end portion of the lever.

An end portion (refer to a lower end portion in Fig. 1) of a rewinding button 5, which is a regulating member drive portion for driving the reverse rotation preventing lever 4, is disposed under a state of being exposed from the case 1 and can be operated by a user. A connecting pin 5a projecting beyond an upper surface of the rewinding button 5 is fitted into the connecting groove portion 4d of the reverse rotation preventing lever, thereby transmitting a motion of the rewinding button 5 to the reverse rotation preventing lever 4. An arm 5b, an arm 5c and an elastically engaging arm 5d are extended from the rewinding button 5 respectively in Fig. 1 in a leftward direction, in an upper direction and in a rightward direction.

A release lever 6 is disposed at an upper position of the rewinding button 5 in Fig. 1. The release button 6 is adapted such that a pressing motion of a release button (not shown) is transmitted to a front end of an arm 6a upward extending from a right end portion in Fig. 1, and is swingably supported by a shaft 6c provided on a front end lower surface of the arm 6b downward extending from nearly the same position perpendicularly thereto. A spring 7 is wound around the shaft 6c, and a counterclockwise urging force is applied to the release lever 6. Further, a pin 6d is provided on an upper surface in the vicinity of a base portion of the arm 6b so as to be possible to engage with a taper end surface in a front end of the arm 5c of the rewinding button 5. A pawl-like projecting portion 6e is provided downward from an intermediate portion of the release lever 6. Further, a projecting piece 6f is provided downward in a left side of the projecting portion 6e, an engaging pawl 6g is provided in a left end portion, and the engaging pawl is adapted such that it can be engaged with the gear 3a of the winding shaft 3 for the film.

A shutter lever 8 is positioned in a left side of the winding button 5 in Fig 1. The shutter lever 8 is swingably supported by a shaft 8a provided perpendicularly to a lower surface of the base portion, a spring 9 is wound around the shaft 8a, and a clockwise urging force is applied to the shutter lever 8. A front end portion of an arm extending to an upper portion of the shutter lever 8 is a shutter drive portion 8b, and an engaging projection 8c is projected on an upper surface in an intermediate portion of the arm and can be engaged with the projecting portion 6e of the release lever 6. An arm 8d is rightward extended at a lower position of the engaging projection 8c, and the arm 5b of the rewinding button 5 can be engaged with a front end of the arm. Further, an arm 8e is leftward extended from a base portion of the shutter lever 8.

A shaft 10 is rotatably supported at a left portion of the shutter lever 8 in Fig. 1, and a pin wheel 10a, on which pins 10a1 each fitting into a perforation of a film F are projected, is fixed to a lower end portion of the shaft 10. A cam 10b is provided in an intermediate portion of the shaft 10, and the cam 10b is composed such that three cam surfaces smoothly curving toward an outer periphery are formed at an equal interval. The arm 8e of the shutter lever 8 can be engaged with each of the cam surfaces in the cam 10b. Another cam 10c is provided on the cam 10b, the cam 10c is formed such that three fan-like cam surfaces are positioned around the shaft at a predetermined gap, and a front end of the projecting piece 6f in the release lever 6 can be elastically contacted with the fan-like cam surfaces and a gap between the cam surfaces.

An operating lever 11 for locking the cover 1c of the film cartridge housing portion 1b is provided on a bottom surface of the camera case 1 so as to project therefrom, a shaft 12 becoming a swinging center thereof is extended toward an upper surface of the case 1, and a gear 13 is fixed to a projecting end of the shaft 12. The gear 13 is provided so as to display that the used state mark of the film is a state of being already photographed when taking out the film cartridge C, and to drive the wheel train for performing a closing motion of a shading cover of the film F by operating the operating lever 11. The motion of the wheel train will be described later in detail.

A mechanism for maintaining an operating state of the rewinding button is disposed between the shaft 12 and the rewinding button 5. The operating state of the rewinding button 5 means a state in which the rewinding button 5 is pressed and a rewinding motion of the film F is performed. Further, the non-operating state of the rewinding button 5 means a state in which the rewinding button is returned and a winding operation of the film is performed. In a mechanism for maintaining the operating state, an engaging portion 12 is disposed on an upper end portion of the shaft 12, and a front end of the elastically engaging arm 5d provided in the rewinding button 5 is engaged with an engaging portion 12a, thereby maintaining the rewinding button 5 in a state of being pressed.

An example of the wheel train when winding the film F is shown in Fig. 3. A gear 21 for rotating the film shaft of the film cartridge C, switching means 22 for switching the rotating direction of the gear 21 between an normal direction and a reverse direction and clutch means 23 for interrupting a transmission of the rotation to the gear 3a of the rewinding shaft 3 are provided in the transmission wheel train W extending from the gear 20 of the winding knob 2 to the gear 3a of the rewinding shaft 3.

Switching means 22 is composed such that two arms are swingably provided on a center shaft of a center gear 22a and that pinions 22b and 22c are rotatably supported by shafts at front end of each of the arms, respectively. Both pinions are always meshed with the center gear 22a, and the pinion to be meshed with the gear 21 is switched in accordance with a rotating direction of the center gear 22a. In Fig. 3, when a counterclockwise rotation (when winding the film) of the gear 20 is transmitted to the gear 21, the center gear 22a rotates clockwise, so that the pinion 22b is meshed with the gear 21 as shown in Fig. 3 and rotated counterclockwise, and so a clockwise rotation is transmitted to the gear 21. On the contrary, when the gear 20 is rotated clockwise (when rewinding the film), the center gear 22a rotates counterclockwise and the pinion 22c is meshed with the gear 21 and rotated clockwise, so that a counterclockwise rotation is transmitted to the gear 21.

The clutch means 23 is composed such that an arm is swingably provided on a center shaft of a center gear 23a and that a pinion 23b is rotatably supported by a shaft at a front end of the arm. The pinion 23b is always meshed with the center gear 23a, and a rotation is transmitted to the gear 3a through another gear in the wheel train, thereby rotating clockwise the winding shaft 3 when winding the film. When rewinding the film, since the center gear 23a of the clutch means 23 rotates clockwise, the pinion 23b moves to a rightward direction and is apart from a next gear, thereby not transmitting a rotation to the gear 3a, so that the rewinding shaft 3 becomes a free state.

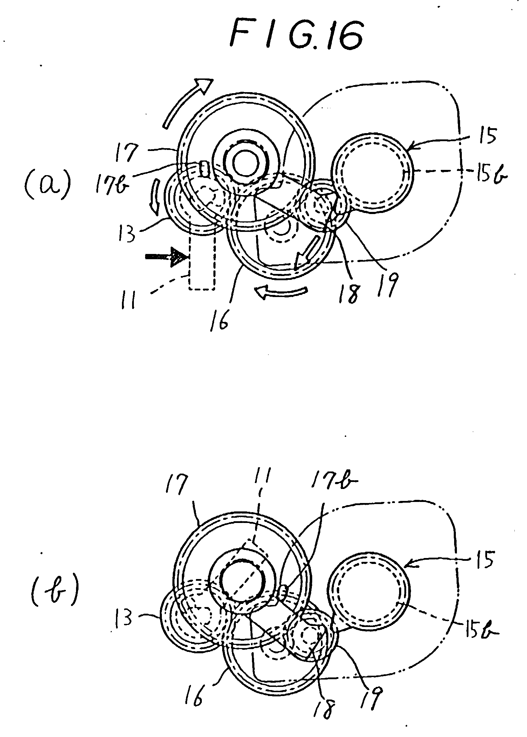

Here, an explanation will be given to a film cartridge C used in this embodiment. The film cartridge is a cartridge for an APS film, and is provided with a used state mark for the film by means of such window holes [1] to [4] as shown in Fig. 15.

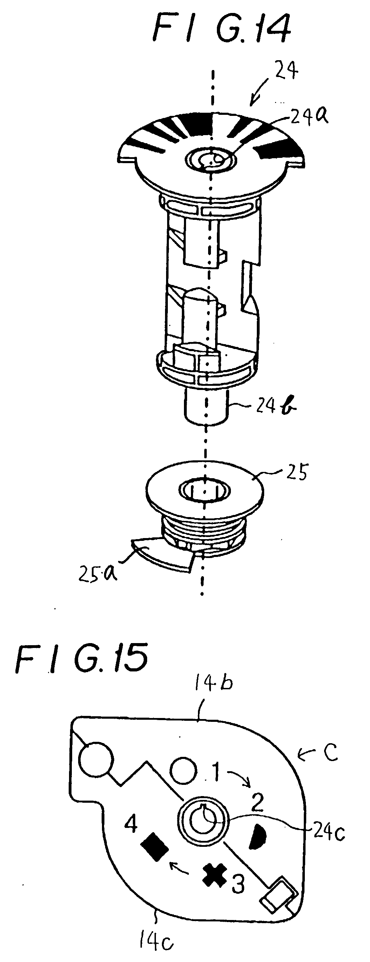

As shown in Fig. 9, a transmitting wheel train for displaying the used state mark for the film as a photographed state when taking out the film cartridge C and for closing the shading cover in the film cartridge C is disposed on an upper surface of the housing portion 1b. That is, a rotating gear 15 for rotating a film shaft 24 (shown in Fig. 14) is provided, a shaft portion 15a having a small diameter and fitted to the film shaft 24 from a lower end surface of the rotating gear 15 is provided downward, a tooth portion 15b is formed in an intermediate portion, and a projection 15c outward projecting is formed in an upper portion. A protrusion 15a1 engaging with a groove portion 24c provided in the film shaft 24 is provided in the shaft portion 15a.

A cover 1c for opening and closing the housing portion 1b is disposed on a bottom surface of the camera case 1 (shown in Fig. 12), and it is adapted so as to insert or take out the film cartridge C into or from the housing portion 1b. The operating lever 11 for locking the cover is disposed adjacent to the cover 1c. The operating lever 11 is fixed to the shaft 12 and swingable about the shaft 12. The shaft 12 extends to an upper surface of the housing portion 1b, and the gear 13 is fixed to an upper end portion of the shaft. A drive shaft 16a for opening and closing the shading cover of the film cartridge C is rotatably provided on the upper surface of the housing portion 1b, and a drive gear 16 is fixed to an upper end portion of the drive shaft 16a. The drive gear 16 is meshed with the gear 13.

A gear 17 is rotatably supported by a shaft on an upper surface of the housing portion 1b, a pinion 17a is integrally provided on a lower surface of the gear 17, and the pinion 17a is meshed with the gear 13. Further, a clutch mechanism is disposed in the wheel train extending from the gear 17 to the rotating gear 15. The clutch mechanism is constituted by a clutch lever 18 frictionally connected to an upper surface of the gear 17, a projection 18a formed at a position engaging with the projection 15c in a front end portion of the clutch lever 18, and a clutch gear 19 rotatably provided on a lower surface of a front end portion of the clutch lever 18. The clutch gear 19 is always meshed with the gear 17, and can be meshed with the tooth portion 15b by a swinging motion of the clutch lever 18. It is adapted such that an engagement between the clutch gear 19 and the tooth portion 15b is released when the projection 15c is engaged with the projection 18a. Further, a position at which the projection 15c and the projection 18a are engaged with each other and the clutch is released is set to be a position at which a position of the tongue piece 25a fixed to the film shaft 24 becomes a position shown by [3] in Fig. 15. Accordingly, when the clutch is released, the tongue piece 25a always comes to a position of being already photographed. A pin 17b is projected on an upper surface of the gear 17, and it can be engaged with the clutch lever 18. Further, the clutch means is composed such that a swinging range thereof is regulated by regulating means (not shown) and, for example, it is regulated to an extent of about 10 degrees of a center angle in a clockwise direction from a position in Fig. 9. Accordingly, the clutch lever 18 is swingable only between the regulating means and the pin 17b.

An example of a structure of the film cartridge C is shown in Figs. 13 to 15. It is constituted by a cartridge case 14a having a substantially cylindrical shape, an upper cover 14b and a lower cover 14c. A slit 14d for drawing out the film is provided in apart of the cartridge case 14a, a shading cover (not shown) is disposed within the slit, and the drive shaft 16a for driving the shading cover is inserted from a through hole 14e disposed between the upper cover 14b and the lower cover 14c so as to open and close the shading cover. Further, a through hole 14f is provided in a center portion of the case 14a, and a shaft hole 24a of the film shaft 24 shown in Fig. 14 is positioned in the through hole 14f. The shaft portion 15a of the rotating gear 15 is inserted into the shaft hole 24a so as to rotate the film shaft 24, thereby performing the winding and the rewinding of the film. A shaft portion 24b is provided downward from a lower end portion of the film shaft 24, and a display member 25 is fixed to the shaft portion 24b. The display member 25 is adapted such that the used state of the film wound around the film shaft 24 can be recognized from outside of the cartridge, and a tongue piece 25a is provided in the display member 25 so as to outward project.

As shown in Fig. 15, the window holes [1] to [4] becoming the used state marks are formed in the case 14a. The state shown in Fig. 15 is under a state in which the tongue piece 25a exists at a position facing the window hole [1] and the window hole [1] is displayed to be white, so that it displays that the film is not used. Since the tongue piece 25a is fixed to the shaft 24, when the film is wound or rewound the film shaft 24 rotates and the tongue piece 25a is rotated as well, so that the tongue piece 25a is repeatedly moved to the positions facing the window holes [4], [3], [2] , [1] ... from the position facing the window hole [1]. The state shown in Fig. 9 displays a state when the shading cover of the film cartridge C is opened and the photographing is performed while winding the film within the cartridge C. In this state, the clutch gear 19 and the tooth portion 15b are not meshed with each other, and the rotating gear 15 can freely rotate, so that the film can be wound and rewound by operating the winding and rewinding mechanism for the film by means of the knob 2.

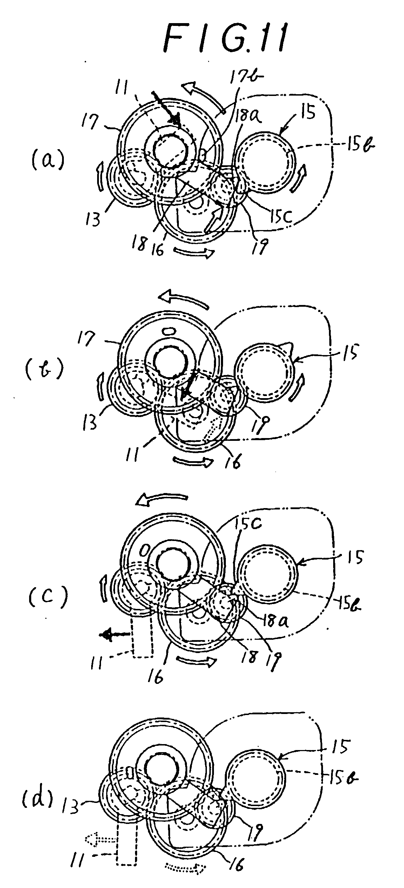

Next, when the operating lever 11 is swung clockwise in Fig. 9, the gear 17 starts to rotate counterclockwise through the gear 13 and the pinion 17a, and the clutch lever 18 frictionally follows to rotation of the gear 17 in accordance with motion of the pin 17b, so that the projection 18a is brought into contact with an outer peripheral surface of the upper end portion in the rotating gear 15 so as to become a state of being elastically pressed. At this time, the clutch gear 19 is meshed with the tooth portion 15b. This state is shown in Fig. 11(a).

When the operating lever 11 is further swung clockwise from the position shown in Fig. 11(a), the rotating gear 15 rotates counterclockwise by a counterclockwise rotation of the gear 17 interlocking with a clockwise rotation of the gear 13 and a clockwise rotation of the clutch gear 19, so that the shaft of the film rotates in a film rewinding direction. Further, at the same time, also the drive gear 16 rotates counterclockwise so as to rotate the drive shaft 16a of the shading cover, and starts to close the shading cover. This state is shown in Fig. 11(b).

When the operating lever 11 continues to swing clockwise and the rotating gear 15 rotates, the projection 15c of the rotating gear 15 is engaged with the projection 18a of the clutch lever 18 so as to swing the lever 18 clockwise as shown in Fig. 11(c), thereby releasing the engagement between the clutch gear 19 and the tooth portion 15b, so that a rotation is not transmitted to the rotating gear 15. However, the drive gear 16 continues rotating and keeps closing the shading cover. And, the shading cover is completely closed when reaching the state shown in Fig. 11(d).

Then, the film cartridge C may be taken out by opening the cover 1c shown in Fig. 12.

In this manner, in the present invention, the tongue piece 25a automatically faces the photographed window hole only by swinging the operating lever 11 so as to take out the film cartridge C, thereby displaying the used state of the film, so that everyone can recognize the state with no error.

Figs. 16(a) and 16(b) explain a motion when inserting a new film cartridge C. When the cartridge C is inserted into the housing portion 1b and the operating lever 11 is swung counterclockwise in Fig. 16 in order to lock the cover 1c, the gear 17 starts to rotate clockwise through the gear 13 and the pinion 17a and the clutch lever 18 frictionally follows to a rotation of the gear 17 so as to swing clockwise, so that an engagement between the tooth portion 15b and the clutch gear 19 is released. In this state, when the drive gear 16 rotates clockwise interlocking with a rotation of the gear 13 so as to rotate the drive shaft 16a of the shading cover and becomes the state shown in Fig. 16(b), the shading cover is completely opened. At this time, since a clockwise rotation of the clutch lever 18 is regulated within a certain angle by the regulating means (not shown), the clutch lever 18 does not endlessly rotate clockwise in accordance with a rotation of the gear 17. Further, since also a counterclockwise rotation is regulated by the pin 17 of the gear 17, the gear 15 and the clutch gear 19 are not engaged with each other even when the clutch lever 18 is swung by an external force. Accordingly, when a rotation is transmitted to the rotating gear 15 by operating the winding mechanism for the film, the film is smoothly wound around the film winding shaft, so that the photographing becomes possible.

When the winding knob 2 is rotated in a rightward direction in Fig. 12, the rotating gear 15 rotates clockwise in Fig. 16(b) interlocking therewith so as to make it possible to wind the film, and, further, a rotation of the winding knob 2 is transmitted to a winding shaft (not shown) through the transmitting wheel train, so that the film can be wound. Further, when rewinding, a clutch of the clutch means 23 shown in Fig. 3 is released so as to make the winding shaft free, and when the winding knob 2 is rotated in a leftward direction in Fig. 12, that rotation rotates the rotating gear 15 counterclockwise in Fig. 16(b) through the transmitting wheel train in an interlocking manner, so that the film can be rewound.

The normal state shown in Fig. 1 corresponds to a state in which the winding button 5 is disposed at a position of the non-operated state, the reverse rotation preventing lever 4 is disposed at the first position and the photographing is performed by winding the film F one frame by one frame. The motion at this time will be briefly mentioned below. When the winding knob 2 is rotated counterclockwise and the gear 21 of the film shaft and the winding shaft 3 are rotated clockwise so as to move the film leftward, the pin wheel 10a fitted into the perforation of the film rotates clockwise, and the shutter lever 8 is swung counterclockwise through the cam 10b and the arm 8e, so that the spring 9 is wound and a spring force is charged. When the shutter lever 8 is swung counterclockwise, the engaging projection 8c is gradually released from the projecting portion 6e, and at the moment it is released the release lever 6 is going to swing counterclockwise due to a spring force of the spring 7, but the projecting piece 6f is brought into contact with the cam surface of the cam 10c, so that the position of the release lever 6 is maintained. At this time, the engaging pawl 6g is not meshed with the gear 3a yet. When the shutter lever 8 further rotates in accordance with a movement of the film, the projecting piece 6f drops in the gap of the cam 10c due to a spring force of the spring 7, so that the engaging pawl 6g is meshed with the gear 3a, thereby preventing the winding shaft 3 for the film from rotating. This position corresponds to a position in which the film is wound by only one frame, and at this position since a right end surface of the engaging projection 8c is engaged with a left end surface of the projecting portion 6e, the position of the shutter lever 8 is kept in that position against an urging force of the spring 9.

Next, when the release button is pushed, the arm 6a is descended and the release lever 6 is swung clockwise, the projecting portion 6e moves upward and an engagement with the engaging projection 8c at the end surface is released, so that the shutter lever 8 becomes free and is instantaneously returned to the original position shown in Fig. 1 due to a spring force charged in the spring 9. At this time, by operating a shutter operating portion (not shown) the shutter drive portion 8b operates the shutter and the photographing is performed. By repeating this motion, the winding of the film and the photographing are repeated.

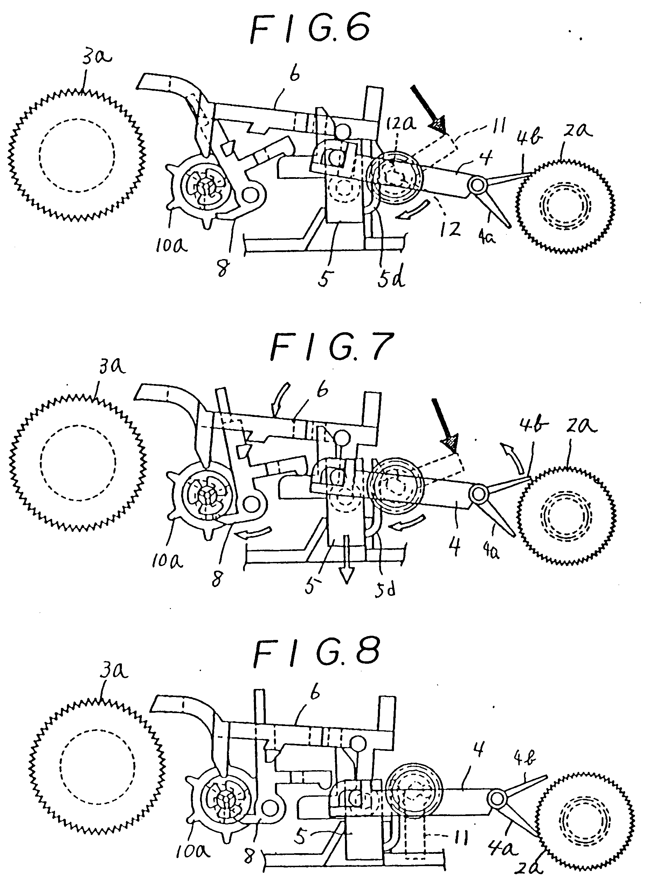

When the photographing is finished and the film is rewound, as shown in Fig. 4 the rewinding button 5 is pressed and moved upward. Accordingly, the connecting pin 5a and the arms 5b and 5c move upward, thereby swinging the reverse rotation preventing lever 4 clockwise, releasing the reverse rotation preventing pawl 4a from the tooth portion 2a of the winding knob 2, swinging the shutter lever 8 counterclockwise through the arm 8d, and shunting the arm 8e from the cam 10b. Further, the pin 6b is pushed upward, thereby swinging the release lever 6 clockwise. The state shown in Fig. 5 corresponds to a state in which the rewinding button 5 is sufficiently moved upward and is in an operating state and the reverse rotation preventing lever 4 is disposed at the second position. In this state, the reverse rotation preventing pawl 4a is released from the tooth portion 2a of the winding knob 2, the reverse rotation preventing pawl 4b is meshed with the tooth portion 2a and the winding knob 2 can rotate only in a reverse rotating direction (clockwise). Further, a front end of the elastically engaging arm 5d of the rewinding button 5 is engaged with the engaging portion 12a, so that an operating state of the rewinding button 5 can be maintained. In this state, the release lever 6 is maintained at a position of being swung clockwise due to the fact that a movement of the pin 6d is prevented by the arm 5c, the shutter lever 8 is maintained at a position of being swung counterclockwise due to the fact that a movement of the arm 8d is prevented by the arm 5b, and the pin wheel 10a and the winding shaft 3 become free.

Thus, when the winding knob 2 is rotated clockwise in such a manner as mentioned above, the film F can be rewound within the film cartridge C. When the rewinding is completed, the rewinding button 5 is returned to a non-operating state. This returning operation is simultaneously performed when taking out the rewound film cartridge C. That is, as shown in Fig. 6, in order to take out the film cartridge C, when the operating lever 11 is swung clockwise to release a lock of the cover in the cartridge housing portion, the engaging portion 12a is released from the engaging position of the elastically engaging arm 5d due to a rotation of the shaft 12, so that the mechanism for maintaining the operating state of the rewinding button 5 is released. Accordingly, a clockwise spring force due to the spring 9 of the shutter lever 8 and a counterclockwise spring force due to the spring 7 of the release lever 6 act together and apply a descending force to the rewinding button 5. And, due to this descending force, the reverse rotation preventing lever 4 is swung counterclockwise, the reverse rotation preventing pawl 4b is released (Fig. 7) from the tooth portion 2a of the winding knob 2, the reverse rotation preventing pawl 4a is meshed (Fig. 8) with the tooth portion 2a and the winding knob 2 can be rotated in a winding direction (counterclockwise). The state shown in Fig. 8 corresponds to a position in which the operating lever 11 is swung clockwise by about 140 degrees. Further, during this swinging motion, the shading cover of the film cartridge is simultaneously closed and the used state mark is displayed to be a photographed state. In other words, the gear 17 starts to rotate counterclockwise through the gear 13 and the pinion 17a, the clutch lever 18 frictionally follows to a rotation of the gear 17 in accordance with a movement of the pin 17b, and the projection 18a is brought into contact with an outer peripheral surface of the upper end portion of the rotating gear 15 and becomes a state of being elastically pressed. At this time, the clutch gear 19 is meshed with the tooth portion 15b. This state is shown in Fig. 11(a).

When the operating lever 11 is further swung clockwise from the position shown in Fig. 11(a), the rotating gear 15 rotates counterclockwise by a counterclockwise rotation of the gear 17 interlocking with a clockwise rotation of the gear 13 and a clockwise rotation of the clutch gear 19, so that the shaft of the film is rotated in a film of rewinding direction. Further, at the same time, also the drive gear 16 rotates counterclockwise so as to rotate the drive shaft 16a of the shading cover, and starts to close the shading cover. This state is shown in Fig. 11(b).

When a clockwise swinging motion of the operating lever 11 is continued and the rotating gear 15 rotates, the projection 15c of the rotating gear 15 is engaged with the projection 18a of the clutch lever 18 so as to swing the lever 18 clockwise as shown in Fig. 11C, thereby releasing an engagement between the clutch gear 19 and the tooth portion 15b, so that a rotation is not transmitted to a rotating gear 15. However, the drive gear 16 continues the rotation and keeps closing the shading cover. And, the shading cover is completely closed when reaching the state shown in Fig. 11(d).

Thus, the film cartridge C may be taken out by opening the cover 1c shown in Fig. 12.

In this manner, in the present invention, the tongue piece 25a automatically faces the photographed window hole only by swinging the operating lever 11 in order to take out the film cartridge C, thereby displaying the used state of the film, so that everyone can recognize the state with no error.

Figs. 16(a) and 16(b) explain a motion when inserting a new film cartridge C. When the new cartridge C is inserted into the housing portion 1b and the operating lever 11 is swung counterclockwise in Fig. 16 in order to lock the cover 1c, the gear 17 starts to rotate clockwise through the gear 13 and the pinion 17a and the clutch lever 18 frictionally follows to a rotation of the gear 17 so as to swing clockwise, so that an engagement between the tooth portion 15b and the clutch gear 19 is released. In this state, when the drive gear 16 rotates clockwise interlocking with a rotation of the gear 13 so as to rotate the drive shaft 16a of the shading cover and becomes the state shown in Fig. 16(b), the shading cover is completely released. At this time, since a clockwise rotation of the clutch lever 18 is regulated within a certain angle by regulating means (not shown), the clutch lever 18 does not endlessly rotate clockwise in accordance with a rotation of the gear 17. Further, since also a counterclockwise rotation is regulated by the pin 17 of the gear 17, the gear 15 and the clutch gear 19 are not engaged with each other even when the clutch lever 18 is swung by an external force. This state becomes the state shown in Fig. 1 in which the film can be wound. Accordingly, when a rotation is transmitted to the rotating gear 15 by operating the knob 2, the film is smoothly wound around the film winding shaft and the photographing is performed.

### Advantages of the Invention

Since it is adapted such that the rotating direction regulating member is selectively disposed at the first and second positions, the winding and rewinding of the film can be performed only by switching a rotating direction of one winding knob, thereby making the operation simple.

Since the mechanism for maintaining the operating state is provided in the regulating member drive portion and the operating lever for locking the cover of the film cartridge housing portion is used for making this mechanism a non-operating state, an exposure is performed in the non-operating state and a rewinding operation is performed in the operating state, so that the exposure is not performed during the operating lever is not swung and the rewinding operation is performed, thereby preventing a double-exposure.

Since the opening and closing of the shading cover and the display switching of the film used state are performed by the wheel train when performing a manual lock releasing operation for the cover or a manual locking operation which are performed when taking out or charging the film, a low price camera in which the APS film is used can be provided.

### BRIEF DESCRIPTION OF THE DRAWINGS

Fig. 1 is a plan view which shows a main portion of an embodiment in accordance with the present invention;
Fig. 2 is a front view of Fig. 1;
Fig. 3 is a reduced plan view which explains a wheel train for winding and rewinding a film;
Fig. 4 is a plan view of a state in which a rewinding button for rewinding a film is slightly pressed;
Fig. 5 is a plan view of an operating state in which the rewinding button is completely pressed from the state shown in Fig. 4;
Fig. 6 is a plan view of a state in which an operating lever is slightly swung in order to return the rewinding button;
Fig. 7 is a plan view of a state in which the operating lever is further swung from the state shown in Fig. 6;
Fig. 8 is a plan view of a state in which the operating lever is completely swung and the rewinding button is returned to a non-operating state;
Fig. 9 is a plan view which shows a mechanism for closing a shading cover and a mechanism for displaying a used state mark in accordance with the invention;
Fig. 10 is a front view of Fig. 9;
Figs. 11(a) to 11(d) are plan views which show an operation when taking out a film cartridge by stages;
Fig. 12 is a perspective view which shows a bottom portion of a camera;
Fig. 13 is a perspective view which shows the film cartridge;
Fig. 14 is an exploded perspective view which shows a structure of an inner portion of the film cartridge;
Fig. 15 is a bottom view of the film cartridge; and
Figs. 16(a) and 16(b) are plan views which show an operation when charging the film by stages.

### Description of Marks

1b
   film cartridge housing portion
1c
   cover
2
   winding knob
3
   winding shaft
4
   rotating direction regulating member (reverse rotation preventing lever)
5
   regulating member drive portion (rewinding button)
5d, 12a
   mechanism for maintaining an operating state of the regulating member drive portion (elastically engaging arm, engaging portion)
11
   operating lever
15
   rotating gear
16
   drive gear
18, 19
   clutch mechanism (clutch lever, clutch gear)
24
   film shaft
C
   film cartridge
F
   film

## Claims

1. A camera manually windable and rewindable a film having a winding knob for a film, a winding shaft for a film, a rotating direction regulating member and a regulating member drive portion for driving said rotating direction regulating member,
wherein when said rotating direction regulating member is disposed at a first position, said winding knob is made possible to be rotated only in one direction and said winding shaft is rotated interlocking with a rotation of said winding knob, thereby winding said film, and
wherein when said rotating direction regulating member is disposed at a second position by said regulating member drive portion, said winding knob is made possible to be rotated only in a reverse direction and an interlock with said winding shaft is interrupted, so that a rewinding of said film is performed by the rotation of said winding knob in the reverse direction.

2. A camera as recited in claim 1, further having an operating lever for locking a cover of a film cartridge housing portion of said camera,
wherein a mechanism for maintaining an operating state of said regulating member drive portion is provided between said regulating member drive portion and said operating lever, and
wherein in order to make said regulating member drive portion a non-operating state, said mechanism for maintaining an operating state of said regulating member drive portion is released by swinging said operating lever.

3. A camera in which a film cartridge having a used state mark for a film housed therein is used and said film is manually wound and rewound, and having a rotating gear for rotating a film shaft in said film cartridge, a drive gear for opening and closing a shading cover in said film cartridge and an operating lever for locking a cover of a film cartridge housing portion of said camera,
wherein in a transmitting wheel train for transmitting a swinging motion of said operating lever to said rotating gear and said drive gear, a clutch mechanism is provided in a wheel train extending from said operating lever to said rotating gear,
wherein when taking out said film cartridge, said clutch mechanism is let in by a swinging motion of said operating lever in one direction, thereby rotating said rotating gear so as to display a predetermined used state by a used state mark for a film and rotating said drive gear so as to close said shading cover, and
wherein when inserting said film cartridge, said clutch mechanism is disengaged by a swinging motion of said operating lever in a reverse direction, thereby making said rotating gear non-rotatable and rotating said drive gear in a reverse direction so as to open said shading cover.
